# EUROPEAN PATENT APPLICATION

(11) **EP 3 892 169 A1**
(43) Date of publication of application: **13.10.2021**
(21) Application number: 21166591.4
(22) Date of filing: 01.04.2021
(51) Int. Cl.: A47J 31/46

(54) **MACHINE FOR THE PREPARATION OF BEVERAGES**

(30) Priority: 08.04.2020 IT 202000007486
(71) Applicant: BARDAZZI, Bruno, 50059 Vinci FI (IT)
(72) Inventor: BARDAZZI, Bruno, 50059 Vinci FI (IT)
(74) Representative: Leucci, Lidia

(57) **Abstract**

Beverage preparation machine, comprising: an infusion unit (1; 7), in turn comprising an infusion chamber (101, 201; 107, 207) intended to receive a prepackaged charge (10) of edible material, feeding means (121; 127) of the pressurized water to the aforesaid prepackaged charge, dispensing means (211; 217) of the prepared drink; a water tank (3), a pump (4) connected to said tank (3), and in fluid communication with said feeding means (121; 167) of the water under pressure to the infusion chamber (101, 201; 107, 207), and a boiler (2), in fluid communication with said pump (4) and with said means for feeding the pressurized water to the infusion chamber, a discharge line (203) being provided to said tank (3) which sends the water back from said feeding means (121; 167) and / or from said boiler (2), being provided control means for the supply circuit of pressurized water; these control means comprise a distribution valve (5; 6).

## Description

The present invention relates to machines for the preparation of beverages, and in particular it relates machines for the preparation of beverages equipped with a pressurized water supply circuit; more particularly it relates to a machine equipped with control means of the pressurized water supply circuit.

The machines for the preparation of beverages generally have an infusion unit, which includes an infusion chamber, made in two portions that couple and uncouple each other, equipped with means for feeding water under pressure to a prepackaged charge of edible powder material placed inside the infusion chamber, and dispensing means for the prepared beverage, a pump that sucks water from a tank, and a boiler in communication with the pump and with the feeding means of the infusion chamber. In many cases, the pressurized water, heated or unheated, is fed into actuator means that allow the two portions of the infusion chamber to approach and move away; furthermore, at the end of the infusion, the fluid present in the circuit is discharged into the tank.

Clearly, this pressurized water circuit requires means that control the delivery of the flow to the boiler and / or the actuator means, as well as the return to the tank; these means are commonly represented by a solenoid valve, which is able to manage the delivery as well as the discharge of water under pressure. However, the solenoid valve assumes the need for a control logic, with a timer and a command interface; this system has quite negligible costs, and is naturally subject to wear to a considerable extent, since it is constantly stressed.

Another important aspect in most machines for the preparation of beverages is given by the fact that, at the end of the dispensing of the beverage, the two portions of the brewing chamber usually remain coupled together with the exhausted prepackaged charge kept inside them. until the new preparation. This can cause the accumulation of residues in the delivery ducts, of deposits in the infusion chamber and in general can worsen the operation of the machine and the quality of the dispensed product. The systems which allow the automatic separation of the portions of the infusion chamber, where provided, are usually constructively complicated and expensive.

The aim of the present invention is therefore to provide a machine for the preparation of beverages in which the pressurized water supply circuit is controlled by means made at low costs, effective in their action and extremely simple in their operation.

A further object of the present invention is to provide a machine for the preparation of beverages in which the actuator means which allow the coupling and uncoupling of the two portions of the infusion chamber are controlled in such a way as to achieve automatic decoupling at the end of the dispensing of the beverage, without introducing particular structural and functional complications into the machine.

The object of the present invention is therefore a machine for preparing beverages, comprising: an infusion unit, in turn comprising an infusion chamber intended to receive a prepackaged charge of edible material, means for feeding pressurized water to the aforementioned prepackaged charge, means for dispensing the prepared drink; a water tank, a pump connected to said tank, in fluid communication with said pressurized water supply means to the infusion chamber, and a boiler, in fluid communication with said pump and with said means for feeding pressurized water to the infusion chamber, a discharge line being provided to said tank which returns the water from said feeding means and / or from said boiler, control means for the pressurized water feed circuit being provided; these control means comprise a distribution valve at least comprising: a way connected to the pump, a way connected to the means for feeding the pressurized water to the infusion chamber, and a way connected to the water tank, being provided a mobile shutter able to connect, at a given pressure value, the way connected to said pump with that connected to said supply means, while the way connected to said supply means and the one connected to the tank are in communication when the pressure in the circuit drops due to pump stop.

In an alternative embodiment, the infusion chamber comprises two portions which couple for dispensing the beverage and uncouple in order to expel the exhausted charge and introduce a new one, being provided with actuator means for coupling and decoupling operated by the flow of pressurized water. These actuator means can be fed in series or in parallel with respect to the pressurized water supply means to the infusion chamber; in the case in which they are fed in parallel, the aforementioned distribution valve comprises a way connected with said actuator means, a way connected with said boiler, a way connected with said tank and a way connected with said pump, a shutter being provided, which is able to connect said pump to said actuator means at a given first pressure value, and to connect said pump to said boiler to a second given pressure value, higher than the first, while at the pressure drop in the circuit due to stopping of the pump, the way connected to said feeding means and that connected to the tank are in communication.

In another embodiment variant, the distribution valve comprises a cylindrical chamber provided with at least three ports, of which at least one radial port, the valve shutter being a sealed sliding piston placed in said chamber, activated by the flow of water coming from the pump, and provided with elastic loading means in the opposite direction. Said piston can advantageously have sealing means at its ends, while a radial opening communicating with an internal axial cavity is formed on the side wall between the two ends, in which are provided means for blocking the flow, suitably calibrated, facing the way communicating with the pump. Advantageously, means can be provided for self-priming the pump, by means of a constant micro-leak arranged in said piston, preferably in an internal chamber coaxial to that provided with the means for preventing the flow. The aforementioned micro-loss also allows the return stroke of the piston under the action of the elastic loading means.

Further advantages and characteristics of the machine according to the present invention will become evident from the following detailed description of some embodiments of the same, in which:
Figure 1 is a schematic diagram showing an embodiment of the machine according to the present invention, with parts in section;
Figures 2 to 4 illustrate the machine of Figure 1 during its operating sequence;
Figure 5 illustrates an enlarged detail of Figure 1, concerning the distribution valve of the machine of the invention;
Figures 6 and 7 illustrate the distribution valve of Figure 5 in two different operating phases;
figure 8 shows an executive variant of the distribution valve of the machine according to the invention; and
Figure 9 illustrates a further embodiment of the machine according to the present invention.

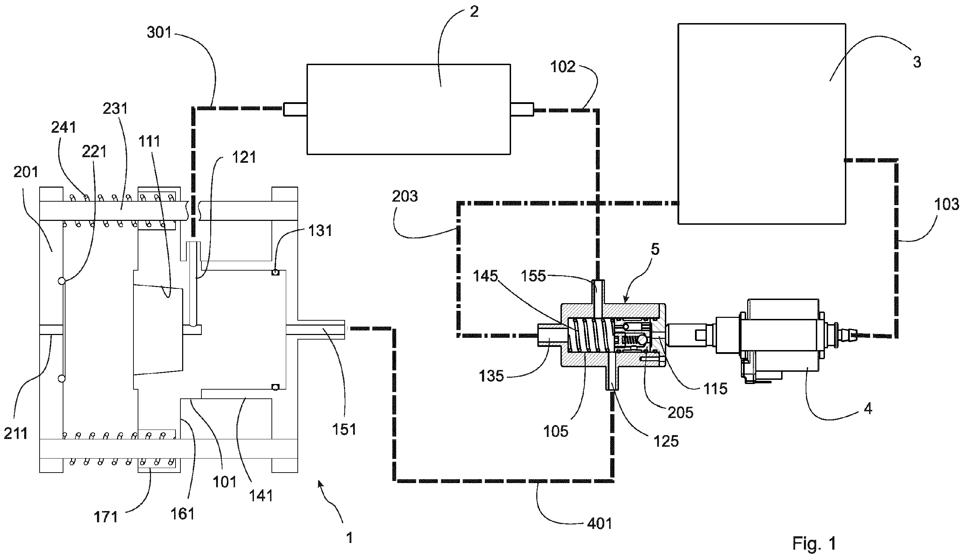

Figure 1 shows a schematic diagram of an embodiment of the machine according to the present invention; 1 designates the infusion unit, which comprises the portion 201 provided with the delivery duct 211 and a gasket 221, and the portion 101, in which the cavity 111 for housing a prepackaged charge is formed, not shown in the figure. The portion 201 is mounted on two tubular guides 231 which pass through the cavities 171 formed in the flaps 161 projecting radially from the portion 101; the springs 241 are inserted into the cavities 171. The hot water supply duct 121 opens into the cavity 111; the portion 101 is movable and sealed, thanks to the gasket 131, in the cylinder 141, into which the pressurized cold water supply duct 151 opens. To duct 121 is connected the duct 301 connected to the boiler 2, in turn supplied by the duct 102 connected to the way 155 of the distribution valve 5. The water is fed to the valve 5 through the pump 4 connected by the duct 103 to the tank 3 .

The valve 5 comprises a cylindrical chamber 105 in which a piston 205 slides, which will be better described below, and which is moved by the cold water coming from the pump 4 through the way 115, coupled to elastic loading means, consisting of the spring 145. The valve also has the way 125 connected to the conduit 401 which opens into the cylinder 141, the discharge way 135 connected via the conduit 203 to the tank 3, and the way 155 connected to the boiler via the conduit 102.

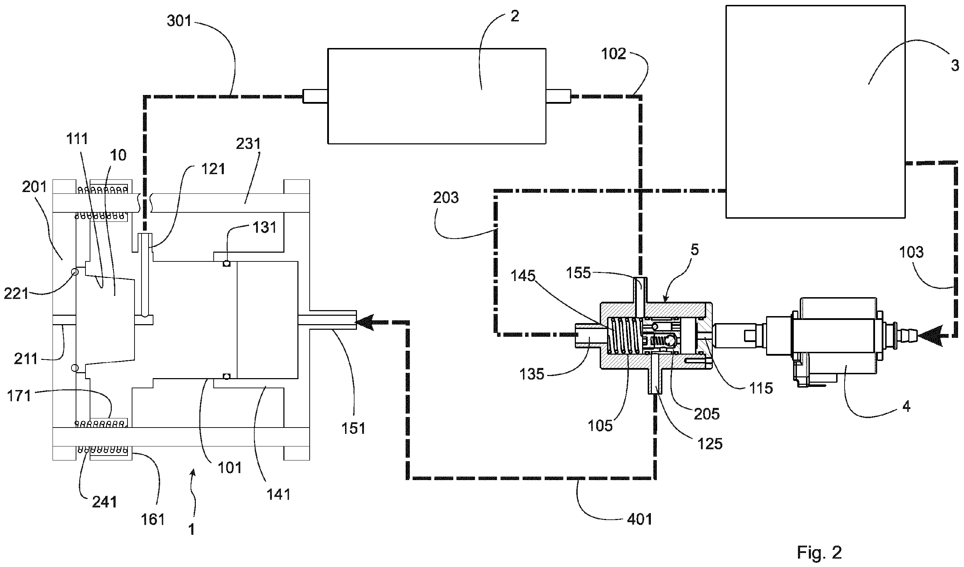

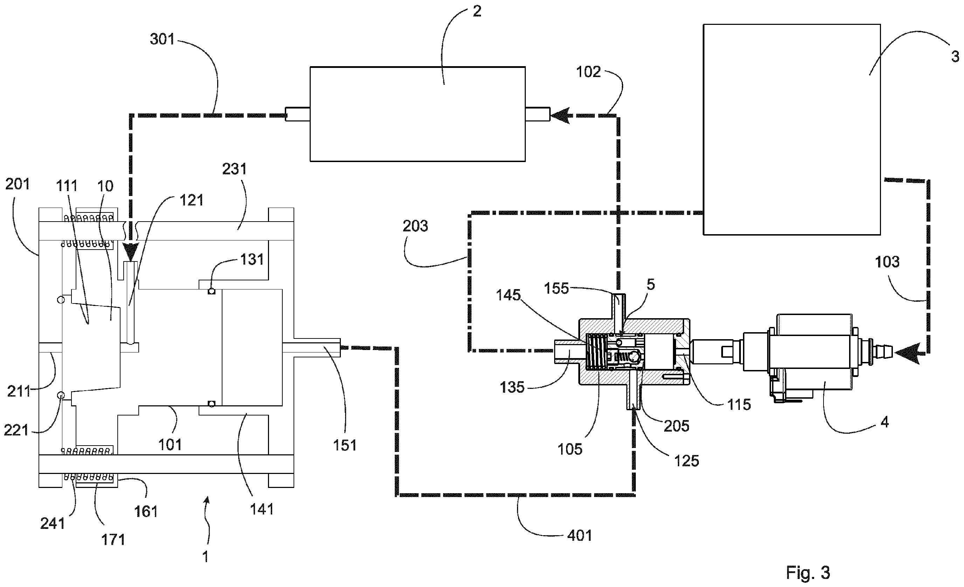

The operation of the machine according to the invention will appear evident from the following; with reference to Figure 2, when the pump 4 is switched on, the cold water flows into the circuit from the tank in the direction of the arrow of the duct 103, enters the chamber 105 and pushes the piston 205, which compresses the spring 145 until it allows the flow through the way 125 and the conduits 401 and 151. Consequently, the water fills the cylinder 141 and displaces the portion 101, compressing the springs 241, until the prepackaged charge abuts against the gasket 221 of the portion 201. In the next step, illustrated in figure 3, it can be seen how, once the portion 101 is coupled to the portion 201, the pressure inside the valve 5 rises and causes the piston 205 to move in such a way that the way 155 is opened to the flow, allowing the water to reach the boiler 2, and from there, at the appropriate pressure and temperature for the infusion, through the duct 301 and the duct 121, come into contact with the prepackaged charge 10 in the cavity 111 , allowing the beverage to be dispensed from the dispensing duct 211.

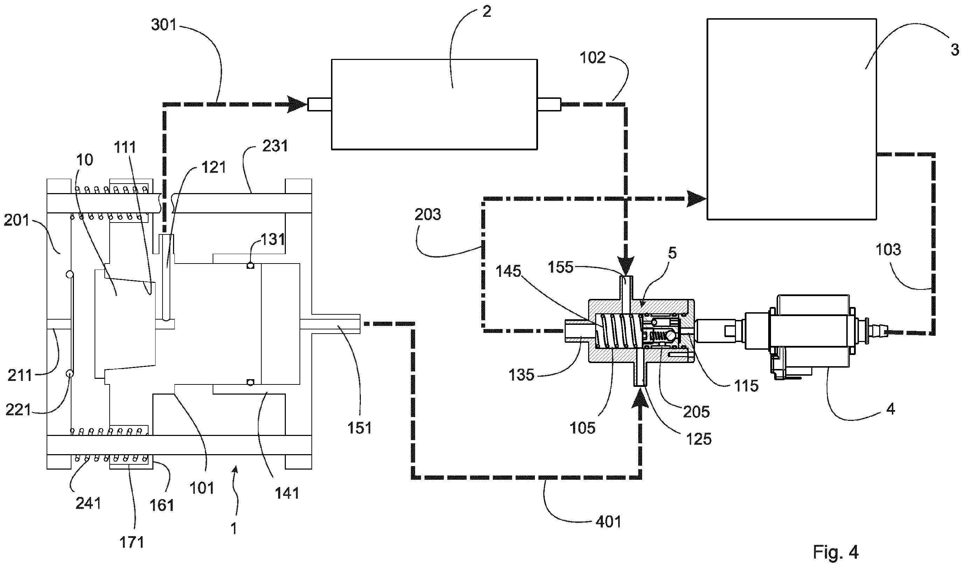

When the delivery is finished (see figure 4), and the operation of the pump 4 is interrupted, the piston 205 returns to the initial position, thanks to the action of the spring 145; then the return flow from the way 125, connected to the cylinder 141 of the portion 101, and from the way 155, connected to the boiler 2, goes to discharge in the way 135 and from this to the conduit 203 which pours the water into the tank 3.

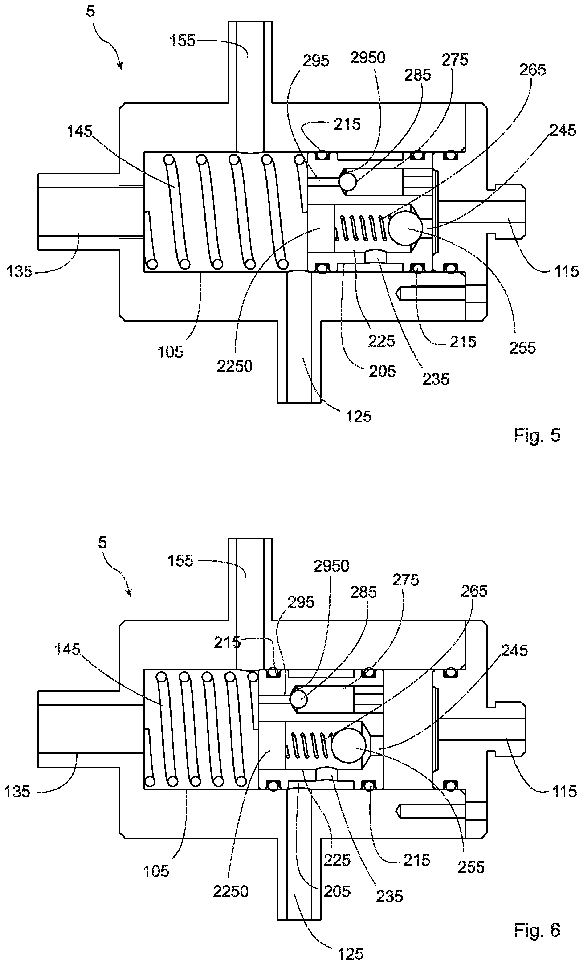

Figure 5 shows the previously described distribution valve 5 in enlarged detail; to equal parts correspond equal numerals. The structure of the piston 205 is shown here in detail, provided with sealing elements 215, which isolate the central portion of the piston from its ends. Inside the piston the chamber 225 is formed, which communicates through the radial hole 235 with the chamber 105, and in which the ball 255 is arranged which blocks the flow of water from the opening 245 in a unidirectional way thanks to the action of the spring 265; the bottom of the chamber 225 is closed by the plug 2250. Coaxial with the chamber 225 there is a chamber 275, open at the end facing the way 115, and at the opposite end provided with the duct 295 obstructed by the sphere 285. At the mouth of the duct the radial incision 2950 is formed, which allows a micro-leak to seep through.

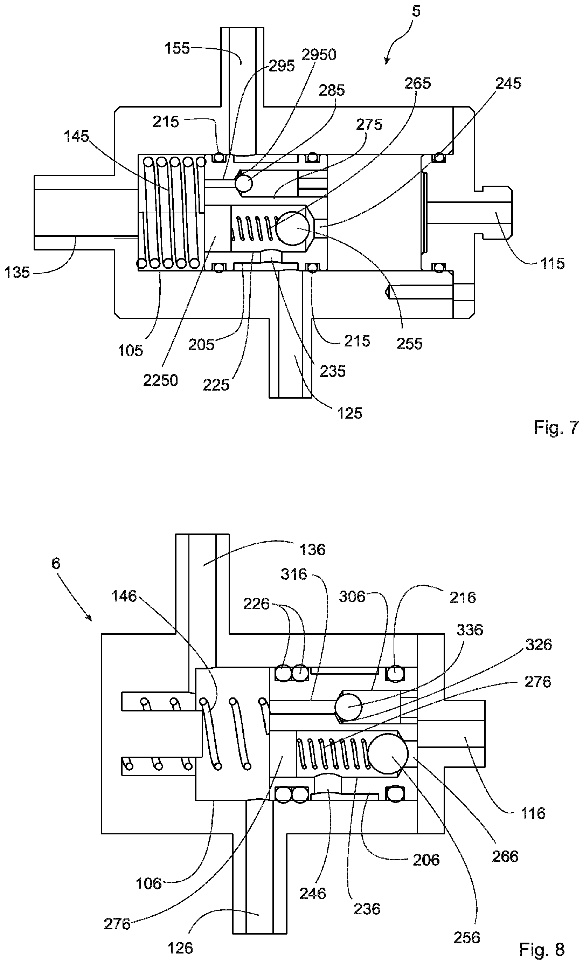

The operation of the distribution valve is evident, with reference to figures 6 and 7. When the pump is switched on, the water pressure rises until it overcomes the action of the spring 265, and therefore allows it to access the chamber 225 and from this to the way 125, once the piston 205, by compressing the spring 145, has moved to the position illustrated in figure 6. At the end of the phase that allows the coupling of the two portions of the brewing unit, as shown in figure 2 , the pressure causes the piston to move further in the manner illustrated in figure 7, allowing the water to reach the position that allows access to the way 155.

Figure 8 illustrates a simplified executive variant of the distribution valve of the machine according to the present invention; the valve is indicated with the numeral 6, and comprises a cylindrical chamber 106 provided with an axial inlet way 116 communicating with the pump, a radial way 126 communicating with the means for feeding the pressurized water to the infusion chamber, and a radial way 136 communicating with the tank. Inside the chamber 106 runs the piston 206, equipped with sealing elements 216 and 226, which isolate the central portion of the piston from its ends. The sealing element 226 has a section equal to or greater than that of the way 126. The chamber 236 is formed inside the piston, and communicates through the radial hole 246 with the chamber 106; in the chamber 236 is provided the sphere 256, which prevents the flow of water from the opening 266 in a unidirectional way thanks to the action of the spring 276. Coaxial with chamber 236 there is a chamber 306, open at the end facing the way 116, and at the opposite end provided with the duct 316 obstructed by the ball 336, the incision 326 being provided on the bottom of the chamber 306, suitable to allow the formation of a micro-leak.

This variant of the valve, apart from the lower number of ways compared to the valve 5 illustrated in Figures 1 to 7, has the sealing element 226 facing the opposite side with respect to the inlet 116 of a section such as to prevent any pressure relief before the piston opens access to the way 126. The functionality performed by the chamber 306 is also illustrated with greater clarity; in the said chamber 306 the pressurized water is still able to seep through the incision 326, thus allowing the piston to return to the initial position under the action of the spring. The micro-leak thus obtained also acts as a self-primer of the pump.

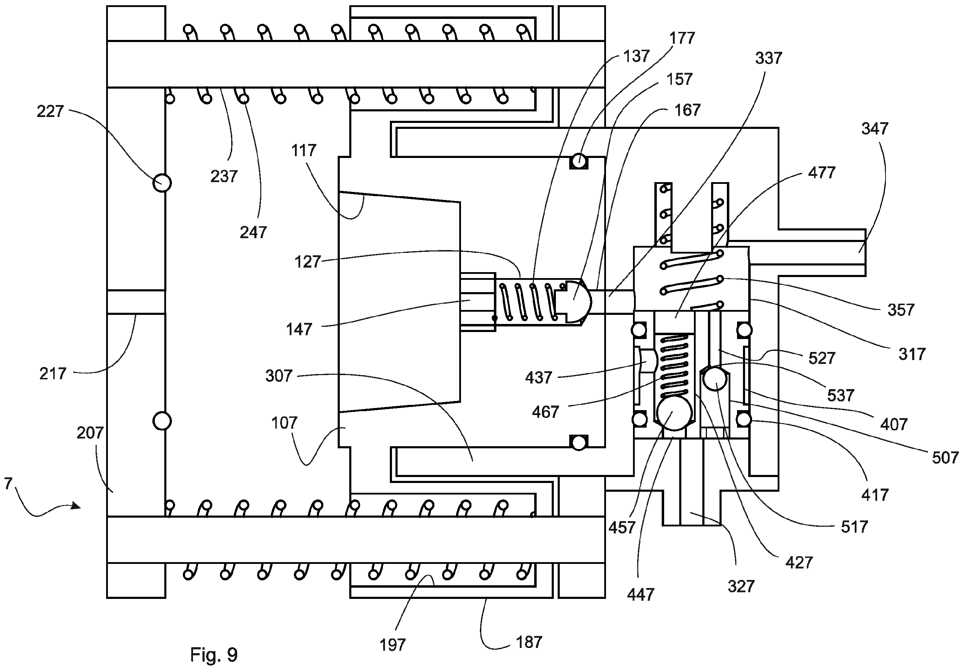

Finally, figure 9 shows in section an embodiment of an infusion unit of a machine according to the present invention, designated with the numeral 7. The infusion unit comprises a portion 107, in which a housing cavity 117 is formed for a prepackaged charge, not shown in the figure, and a portion 207, provided with a delivery duct 217 and sealing means 227: the portion 207 is connected by means of the guides 237 to the block 307, while the springs 247 elastically load the movement of the portion 107, cooperating with the cavities 197 formed in the radially projecting flaps 187 of the portion 107; said portion 107 is hermetically sliding in the block 307 thanks to the gasket 177. An axial chamber 127 is formed in the portion 107 in which the duct 147 intended to communicate with the same cavity 117 is formed at the end facing the cavity 117, while at the opposite end, access 167 to chamber 127 is blocked by shutter 157, loaded by spring 137.

Overlooking the access 167 there is the way 337 of the distribution valve which includes the cylindrical cavity 317 obtained in the block 307, with the inlet way 327 facing the pump, in this case placed in series with the boiler, both not shown in the figure. The piston 407 is positioned in the chamber 317, and insists against the elastic loading means 357 positioned on the opposite end of the chamber 317. The piston 407 is provided with sealing elements 417, which isolate the central portion of the piston from its ends. The chamber 427 is formed inside the piston, and communicates through the radial hole 437 with the chamber 317; in the said chamber 427 is arranged the ball 457, which blocks the flow of water from the opening 447 thanks to the action of the spring 467. Coaxial to the chamber 427 is a chamber 507, open at the end facing the way 327, and at the opposite end provided with the duct 527 obstructed by the sphere 517; the incision 537 formed at the mouth of the duct 527 is foreseen to allow the seeping of water and the formation of a micro-leak.

The operation of the brewing unit as described above will be evident from the following. When the pump is turned on, the water fed into the valve moves the piston 407 until the level that allows the water to be fed to the cylinder 307 through the duct 327, connected to the pump, is reached. The portion 107 at this point slides along the guides 237 and, by compressing the springs 247, it mates with the portion 207. At this point, the pressure becomes able to overcome the resistance of the spring 137, and therefore the water is introduced in the cavity 117, and from here it comes into contact with the prepackaged charge, allowing the dispensing of the drink. When the pump is stopped, the piston 407 returns to the position shown in figure 9, allowing the water to return from the cylinder 307 to the tank through the way 347; the spring 247 forces the portion 107 into the chamber of the cylinder 307, emptying it.

The machine according to the present invention therefore offers a brilliant solution to the problems highlighted in the state of the art, with the adoption of means for controlling the pressurized water supply circuit with simple operation and substantially economical construction. In fact, in the most common and most expensive practice, the same functions are performed by a solenoid valve.

## Claims

1. Beverage preparation machine, comprising: an infusion unit (1; 7), in turn comprising an infusion chamber (101, 201; 107, 207) intended to receive a prepackaged charge (10) of edible material, feeding means (121; 127) of the pressurized water to the aforesaid prepackaged charge, dispensing means (211; 217) of the prepared drink; a water tank (3), a pump (4) connected to said tank (3), and in fluid communication with said feeding means (121; 167) of the water under pressure to the infusion chamber (101, 201; 107, 207), and a boiler (2), in fluid communication with said pump (4) and with said means for feeding the pressurized water to the infusion chamber, a discharge line (203) being provided to said tank (3) which sends the water back from said feeding means (121; 167) and / or from said boiler (2), being provided control means for the supply circuit of pressurized water, **characterized in that** these control means comprise a distribution valve (5; 6) at least comprising: a way (116) connected to the pump, a way (126) connected to the means for feeding the pressurized water to the infusion chamber, and a way (136) connected to the water tank, the valve being provided with a mobile shutter (206) capable of connecting, at a value of given pressure, the way (116) connected to said pump with the way (126) connected to said feeding means, while, at the pressure drop in the circuit due to the pump stop, the way (126) connected to said feeding means and the way (136) connected to the tank are in communication.

2. Machine according to claim 1, wherein the brewing chamber comprises two portions (101, 201; 107, 207) which couple together for the dispensing of the drink and uncouple so as to expel the exhausted charge and introduce a new one, there being provided actuator means (141, 151; 307, 337) of the coupling and decoupling ,operated by the flow of water under pressure.

3. Machine according to claim 2, wherein said actuator means (307, 337) are fed in series with respect to the feeding means (127) of the water under pressure to the infusion chamber.

4. Machine according to claim 2, wherein said actuator means (141, 151) are fed in parallel with respect to the feeding means (121) of the water under pressure to the infusion chamber.

5. Machine according to claim 4, wherein said distribution valve (5) comprises a cylindrical chamber (105) provided with one way (125) connected with said actuator means (141, 151), one way (155) connected with said boiler, one way (135) connected with said tank (3) and one way (115) connected with said pump, being provided a shutter (205) able to connect, to a first given pressure value, said pump (4) with said actuator means (141, 151), and at a second pressure value, greater than the first, to connect said pump (4) to said boiler (2), while, at the drop of pressure in the circuit due to the pump stopping , the way (125) connected to said actuator means (141, 151), the way (155) connected to the boiler (2), and the way (135) connected to the tank are in communication.

6. Machine according to any one of the preceding claims 1 to 5, wherein the distribution valve (5; 6) comprises a cylindrical chamber (105; 106) provided with at least three ways (116, 126, 136), of which at least one radial (126), the valve shutter being a piston (205; 206) fluid-tight sliding in said chamber (105; 205), activated by the flow of water coming from the pump, and provided with elastic loading means (145; 146) in the opposite direction.

7. Machine according to claim 6, wherein said piston (5; 6) has the sealing means (215; 216, 226) at its ends, while on the lateral wall between the two ends a radial opening (235; 246) is formed, communicating with an internal axial cavity (225; 236), in which flow-cutting means (255, 265; 256, 276) are provided, suitably calibrated, facing the way (115; 116) communicating with the pump.

8. Machine according to claim 7, wherein said sealing means (226) have a width not less than the section of the at least one radial way (126) of the said cylindrical chamber.

9. Machine according to claim 7 or 8, wherein said piston (5; 6) comprises a further axial chamber (275; 306) coaxial with the internal axial cavity (225; 236), in which flow-cutting means are provided (255, 265; 256, 276), being said chamber (275; 306) communicating through a conduit (295; 316) with the side of the cylindrical chamber (105; 205) opposite to that facing the way connected to the pump, being provided means for drawing a micro-leakage flow (295, 2950; 326, 336) between said axial chamber (275; 306) and said conduit (295; 316).
